# EUROPEAN PATENT APPLICATION

(11) **EP 4 525 135 A1**
(43) Date of publication of application: **19.03.2025**
(21) Application number: 24196215.8
(22) Date of filing: 23.08.2024
(51) Int. Cl.: H01M 10/42, H01M 10/48, H01M 50/204

(54) **FPC ACQUISITION DEVICE AND BATTERY MODULE**

(30) Priority: 25.08.2023 CN 202322306839 U; 13.08.2024 WO PCT/CN2024/111748
(71) Applicant: Eve Energy Co., Ltd., Huizhou, Guangdong 516006 (CN)
(72) Inventor: HUANG, Zhihua, Huizhou (CN)
(74) Representative: Murgitroyd & Company

(57) **Abstract**

This application provides an FPC acquisition device and a battery module, including: a first FPC section, a second FPC section, and a third FPC section, where the first FPC section is attached to a first surface of the battery module body, the second FPC section is, attached to a second surface of the battery module body after being folded and bent relative to the first FPC section, and the third FPC section is attached to a third surface of the battery module body after being folded and bent relative to the second FPC section.

## Description

### TECHNICAL FIELD

This application relates to the field of battery technology, specifically to an FPC (Flexible Printed Circuit) acquisition device and a battery module.

### BACKGROUND

In the related technology, the FPC board in most battery modules is disposed on a side of the battery module body. By bending a section of the FPC board 90° to a top surface of the battery module body, and then bending a part of the FPC section on the top surface 90° to a front surface of the battery module body, signals collected by the FPC board are allowed to output from the front surface of the battery module body.

### SUMMARY

However, a planar shape of the FPC board mentioned in the background is generally "Z" shaped. In the production of such FPC board, it is necessary to cut a large area of FPC material without wiring through the die-cutting process, which leads to a waste of FPC material and thus increases a material cost of making the FPC board.

This application provides an FPC acquisition device. The FPC acquisition device includes:
an FPC board, strip-shaped, comprising a first FPC section, a second FPC section, and a third FPC section connected in sequence along a length direction of the FPC board, wherein the first FPC section, the second FPC section, and the third FPC section are integrally formed; the first FPC section is attached to a first surface of a battery module body; the second FPC section is, after being folded and bent relative to the first FPC section, attached to a second surface of the battery module body; the third FPC section is, after being folded and bent relative to the second FPC section, attached to a third surface of the battery module body; and the first surface, the second surface, and the third surface are adjacent to each other;
a signal acquisition patch, disposed at the first FPC section;
a signal output interface, disposed at the third FPC section.

This application also provides a battery module. The battery module includes a battery module body and the FPC acquisition device according to any one of the aforementioned, where the FPC acquisition device is configured to collect battery status signals in the battery module body.

### BENIFICIAL EFFECTS

In this application, a strip-shaped FPC board is used, divided into three FPC sections. Through folding and bending between the FPC sections, one of the FPC sections is attached to other adjacent surface of the battery module body, ultimately allowing the signals collected by the FPC board to be output from the third FPC section attached to the third surface of the battery module body. This eliminates the need for a "Z" shaped FPC board, resulting in less material waste and reduced material costs for making the FPC board compared to the "Z" shaped FPC board.

### BRIEF DESCRIPTION OF THE DRAWINGS

Figure 1 is a schematic diagram of the overall structure of the FPC acquisition device and the battery module body provided by a possible implementation of this application;
Figure 2 is a detailed structural diagram of area A in Figure 1;
Figure 3 shows the structural diagram of the FPC board in Figure 1, but in an unfolded configuration;
Figure 4 is a structural diagram of the folded and bent FPC board in Figure 1;
Figure 5 is a detailed structural diagram of area B in Figure 1;
Figure 6 is a plan view of part of the structure in the first FPC section in Figure 5;
Figure 7 is a diagram showing the laminated structure in the cross-section of the first FPC section;
Figure 8 is another detailed structural diagram of area B in Figure 1.

### Illustration of the reference signs:

1: FPC acquisition device; 10: FPC board; 11: First FPC section; 12: Second FPC section; 13: Third FPC section; 14: First dashed line; 15: Second dashed line; 16: Third dashed line; 17: Fourth dashed line; 18: Groove; 181: First side wall; 182: Second side wall; 183: Positioning hole; 19: "S" shaped connector; 191: First end; 192: Second end; 193: Micro-connection section; 111: First protective film layer; 112: FPC substrate layer; 113: Cover film layer; 114: Second protective film layer; 20: Signal acquisition patch; 21: First signal acquisition segment; 22: Second signal acquisition segment; 23: Crease along which the second signal acquisition segment 22 is to be bent relative to the first signal acquisition segment 21; 30: Signal output interface; 2: Battery module body; 3: Positioning column; 4: Busbar.

### DETAILED DESCRIPTION

In this application, without contrary indication, directional terms such as "top" and "bottom" usually refer to the top and bottom in the actual use or working state of the device, specifically the direction in the drawings; while "inner" and "outer" are in relation to the outline of the device.

In order to reduce the material cost of making the FPC board, the possible implementation of this application provides the FPC acquisition device and the battery module, using the strip-shaped FPC board, divided into three FPC sections; through folding and bending between the FPC sections, one of the FPC sections is attached to other adjacent surface of the battery module body, the implementation ultimately allows the signals collected by the FPC board to be output from the third FPC section attached to the third surface of the battery module body. This eliminates the need for the "Z" shaped FPC board, resulting in less material waste and reduced material costs for making the FPC board, and no additional cutting processes are needed, reducing the processing cycle of the FPC board. For specific solutions, please refer to the following detailed description.

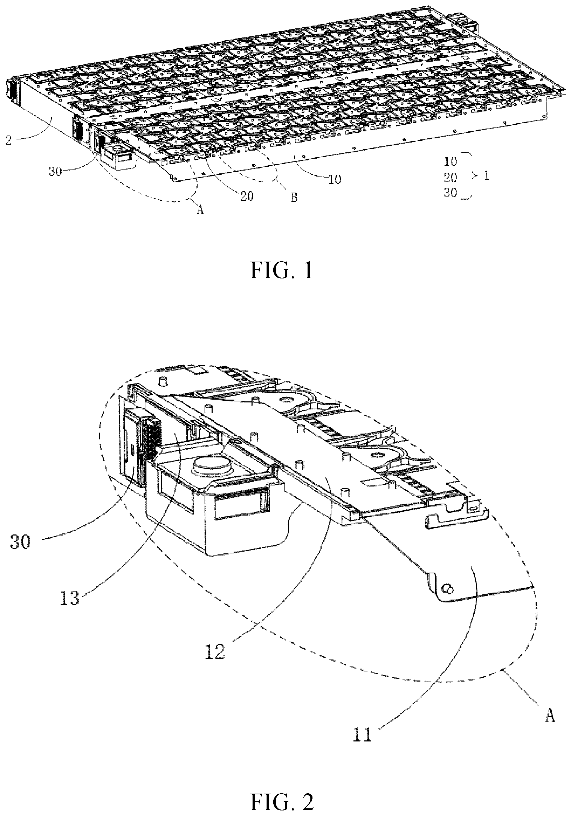

In a first aspect, the possible implementation of this application provides an FPC acquisition device. Please refer to Figures 1 and 2, Figure 1 is the schematic diagram of the overall structure of the FPC acquisition device 1 and the battery module body 2, and Figure 2 is the detailed structural diagram of area A in Figure 1. It can be seen from Figures 1 and 2 that the FPC acquisition device 1 includes the signal acquisition patches 20, the FPC board 10, and the signal output interface 30. The signal acquisition patches 20 each are generally a nickel patch. Each signal acquisition patch 20 is used to collect battery status signals of a row of batteries connected by a corresponding busbar in the battery module body 2, and the battery status signals generally record signals such as the current voltage and temperature of the battery. The FPC board 10 is used to transmit the battery status signals collected by the signal acquisition patches 20 to the signal output interface 30, so that the battery status signals can be output externally from the signal output interface 30. For example, the signal output interface 30 can be connected to the BMS (Battery Management System) outside the battery module, facilitating the monitoring and management of the batteries status in the battery module body 2 by the BMS. The battery module body 2 contains batteries that provide electrical energy, for example, to electric vehicles.

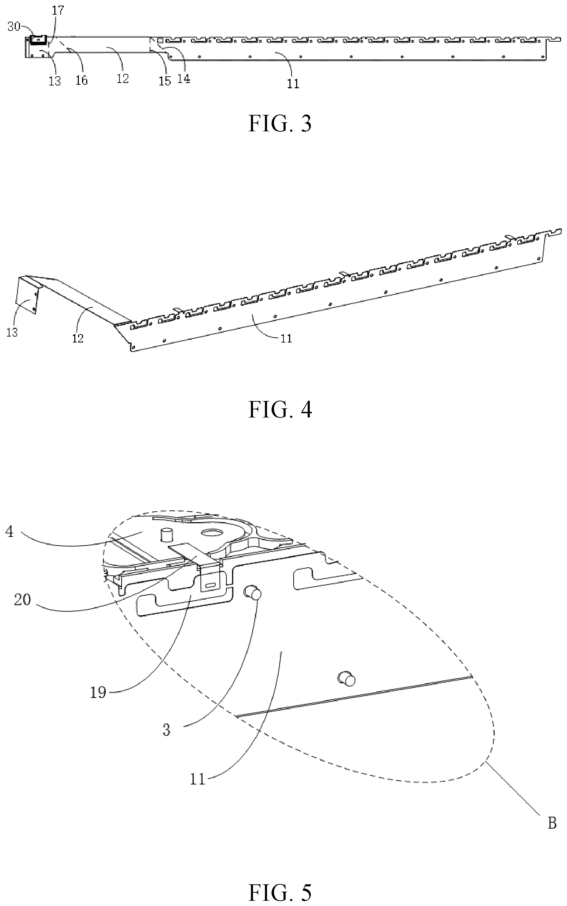

Please refer to Figures 3 and 4, Figure 3 shows the structural diagram of the FPC board 10 in Figure 1, but in an unfolded configuration, and Figure 4 is the structural diagram of the FPC board 10 in Figure 1 after being folded and bent. It can be seen from Figure 3 that the unfolded FPC board 10 is strip-shaped, including the first FPC section 11, the second FPC section 12, and the third FPC section 13 connected in sequence along the length direction of the FPC board 10, and the first FPC section 11, the second FPC section 12, and the third FPC section 13 are integrally formed. Thus, the strip-shaped FPC board 10 can be cut directly through the die-cutting process, avoiding the waste of FPC material. The length direction of the FPC board 10 in Figure 3 is exemplified as the direction from right to left.

Refer to Figures 2 and 4, the first FPC section 11 is attached to the first surface of the battery module body 2, the second FPC section 12 is attached to the second surface of the battery module body 2, and the third FPC section 13 is attached to the third surface of the battery module body 2, so that by setting the signal acquisition patch 20 at the first FPC section 11 and the signal output interface 30 at the third FPC section 13, it is possible to output the battery status signals from the third surface of the battery module body 2. The first surface, the second surface, and the third surface are adjacent to each other. In Figure 2, the first surface is exemplified as the side surface of the battery module body 2, the second surface is exemplified as the top surface of the battery module body 2, and the third surface is exemplified as the front surface of the battery module body 2. To more specifically describe the FPC acquisition device in the possible implementation of this application. The following content is described using the side surface, the top surface, and the front surface of the battery module body 2 shown in Figure 2, instead of the first surface, the second surface, and the third surface, as follows.

Refer to Figures 3 and 4, after the second FPC section 12 is folded and bent relative to the first FPC section 11, and the second FPC section 12 is attached to the top surface of the battery module body 2. In this case, a folded portion means that the portion is bent so that at least part of it overlaps other part, that is, the bending angle is 180°; and a bent portion means that the portion is bent but does not overlap any other portion, but forming a certain angle therebetween, that is, the bending angle is less than 180°. In Figure 3, since the first FPC section 11 is attached to the side surface of the battery module body 2, the second FPC section 12 can be folded relative to the first FPC section 11 along the first dashed line 14, and then bent relative to the first FPC section 11 along the second dashed line 15, forming the relative position relationship between the second FPC section 12 and the first FPC section 11 as shown in Figure 4, so that the second FPC section 12 is attached to the top surface of the battery module body 2.

Similarly, after the third FPC section 13 is folded and bent relative to the second FPC section 12, the third FPC section 13 is attached to the front surface of the battery module body 2. Specifically, in Figure 3, after the second FPC section 12 is attached to the top surface of the battery module body 2, the third FPC section 13 can be folded relative to the second FPC section 12 along the third dashed line 16, and then bent relative to the second FPC section 12 along the fourth dashed line 17, forming the relative position relationship between the third FPC section 13 and the second FPC section 12 as shown in Figure 4, so that the third FPC section 13 is attached to the front surface of the battery module body 2.

In some possible implementations of this application, in Figure 3, the folding direction of the second FPC section 12 relative to the first FPC section 11 (i.e., the first dashed line 14, which is perpendicular to the normal direction of the plane where the FPC board 10 is located) is inclined to the length direction of the FPC board 10, facilitating the folded second FPC section 12 to be attached to the top surface of the battery module body 2. Similarly, in Figure 3, the folding direction of the third FPC section 13 relative to the second FPC section 12 (i.e., the third dashed line 16, which is perpendicular to the normal direction of the plane where the FPC board 10 is located) is inclined to the length direction of the FPC board 10, facilitating the folded third FPC section 13 to be attached to the front surface of the battery module body 2.

In some possible implementations of this application, in Figure 3, the folding direction of the second FPC section 12 relative to the first FPC section 11 and the folding direction of the third FPC section 13 relative to the second FPC section 12 are parallel, that is, the first dashed line 14 is parallel to the third dashed line 16, facilitating the second FPC section 12 to be folded and bent from the side surface of the battery module body 2 to be attached to the top surface of the battery module body 2, and then the third FPC section 13 can also be folded and bent from the top surface of the battery module body 2 to be attached to the front surface.

In some possible implementations of this application, in Figure 3, the angle between the crease along which the second FPC section 12 is to be folded relative to the first FPC section 11 and the length direction of the FPC board 10 is 45°, that is, the angle between the first dashed line 14 and the length direction of the FPC board 10 is 45°, so that after the second FPC section 12 is folded and bent from the side surface of the battery module body 2 to be attached to the top surface, the second FPC section 12 is parallel or perpendicular to the edge of the top surface of the battery module body 2, facilitating the installation of the second FPC section 12. Similarly, in Figure 3, the angle between the crease along which the third FPC section 13 is to be folded relative to the second FPC section 12 and the length direction of the FPC board 10 is 45°, that is, the angle between the third dashed line 16 and the length direction of the FPC board 10 is 45°, so that after the third FPC section 13 is folded and bent from the top surface of the battery module body 2 to be attached to the front surface, the second FPC section 12 is parallel or perpendicular to the edge of the front surface of the battery module body 2, facilitating the installation of the third FPC section 13.

In some possible implementations of this application, in Figure 3, the crease along which the second FPC section 12 is to be bent relative to the first FPC section 11 (i.e., the second dashed line 15), and the crease along which the third FPC section 13 is to be bent relative to the second FPC section 12 (i.e., the fourth dashed line 17) are both perpendicular to the length direction of the FPC board 10, facilitating the attachment of the second FPC section 12 to the top surface and the third FPC section 13 to the front surface of the battery module body 2.

In some possible implementations of this application, the positions where the second FPC section 12 is folded relative to the first FPC section 11, and where the third FPC section 13 is folded relative to the second FPC section 12, are both equipped with foam. Specifically, the foam is generally set between the two overlapping parts after folding operation, so as to prevent the FPC from springing back after folding. For example, after the second FPC section 12 is folded relative to the first FPC section 11, the second FPC section 12 and the first FPC section 11 overlap at least in part, at this time, foam can be set between the overlapping part of the second FPC section 12 and the overlapping part of the first FPC section 11. Similarly, after the third FPC section 13 is folded relative to the second FPC section 12, the third FPC section 13 and the second FPC section 12 overlap at least in part, at this time, foam can be set between the overlapping part of the third FPC section 13 and the overlapping part of the second FPC section 12. In an example, the length and width of the foam can both be 1 millimeter.

In some possible implementations of this application, as shown in Figure 5, Figure 5 is the detailed structural diagram of area B in Figure 1. In Figure 5, one end of the signal acquisition patch 20 is connected to the first FPC section 11, and the other end is connected to the busbar 4 on the top surface of the battery module body 2, with batteries connected below the busbar 4, facilitating the signal acquisition patch 20 to collect battery status signals. However, when some battery expands upward due to heat or other factors, the end of the signal acquisition patch 20 connected to the busbar 4 will also move upward, which can easily cause the signal acquisition patch 20 to break and affect the collection of battery status signals.

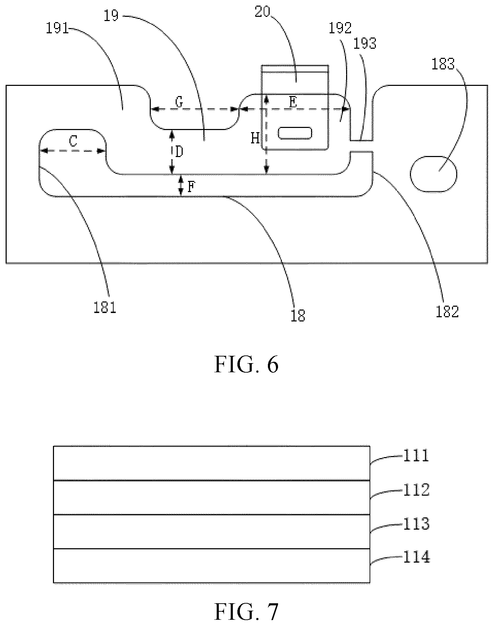

To address this, some possible implementations of this application have made improvements to part of the structure in the first FPC section 11. Specifically, as shown in Figure 6, Figure 6 is the plan view of part of the structure in the first FPC section 11 in Figure 5. In Figure 6, the groove 18 is set on the side of the first FPC section 11 facing the top surface of the battery module body 2, and the first FPC section 11 includes an "S" shaped connector 19, which is set in the groove 18, and there is a gap between the "S" shaped connector 19 and the groove 18. The "S" shaped connector 19 includes the first end 191 and the second end 192, with the first end 191 fixed to the first side wall 181 of the groove 18, and the signal acquisition patch 20 fixed to the second end 192. In this way, even if the battery expands upward, the "S" shaped connector 19 allows the signal acquisition patch 20 to follow the busbar 4 and move upward a certain distance, avoiding the breakage of the signal acquisition patch 20. The structure shown in Figure 6 can exist in multiple quantities to connect different signal acquisition patches 20 through different "S" shaped connectors 19.

In an example, the dimensions of the "S" shaped connector 19 are illustrated, for example, Figure 6 shows the dimensions at positions C, D, E, F, G, H, which can be 6 millimeters at C, 4 millimeters at D, 10 millimeters at E, 2 millimeters at F, 8 millimeters at G, and 7.2 millimeters at H.

In some possible implementations of this application, the material of the first FPC section 11 is explained. Refer to Figure 7, Figure 7 shows the laminated structure in the cross-section of the first FPC section 11. In Figure 7, the first FPC section 11 includes the first protective film layer 111, the FPC substrate layer 112, the cover film layer 113, and the second protective film layer 114, stacked in order, with the first protective film layer 111 located on a side of the first FPC section 11 close to the battery module body 2, and the second protective film layer 114 located on a side of the first FPC section 11 away from the battery module body 2. One end of the signal acquisition patch 20 is fixed between the FPC substrate layer 112 and the cover film layer 113 at the second end 192, allowing the signal acquisition patch 20 to make contact with the FPC substrate layer 112, so that the battery status signals collected by the signal acquisition patch 20 can be transmitted from the signal acquisition patch 20 to the FPC substrate layer 112 for transmission within the FPC substrate layer 112.

The FPC substrate layer 112 specifically includes the PI (Polyimide Film) reinforcement layer, the substrate adhesive layer, and the FPC copper foil, stacked in order, with the PI reinforcement layer set on a side of the FPC substrate layer 112 away from the cover film layer 113, and the FPC copper foil set on a side of the FPC substrate layer 112 close to the cover film layer 113. The end of the signal acquisition patch 20 fixed between the FPC substrate layer 112 and the cover film layer 113 is specifically fixed between the FPC copper foil and the cover film layer 113, and the fixation of this end of the signal acquisition patch 20 can be achieved using solder paste and reflow soldering.

In an example, the thickness of the FPC substrate layer 112 can be 0.11 millimeters, where the thickness of the FPC copper foil is 35 micrometers, the thickness of the substrate adhesive layer is 25 micrometers, and the thickness of the PI reinforcement layer is 50 micrometers. The thicknesses of the first protective film layer 111 and of the second protective film layer 114 are both 50 micrometers, the thickness of the adhesive between the first protective film layer 111 and the PI reinforcement layer, the thickness of the adhesive between the second protective film layer 114 and the PI reinforcement layer, and the thickness of the adhesive between the cover film layer 113 and the FPC copper foil are 25 micrometers each, resulting in the total thickness of the first FPC section 11 of 0.3 ± 0.05 millimeters.

In the process of forming the first FPC section 11, after welding one end of the signal acquisition patch 20 to the FPC substrate layer 112 and covering it with the cover film layer 113, it is also necessary to adhere the second protective film layer 114 on top of the cover film layer 113. However, due to the structural design of the "S" shaped connector 19, the "S" shaped connector 19 may wobble, making it difficult for the second protective film layer 114 to adhere accurately.

To address this, some possible implementations of this application have further improved part of the structure in the first FPC section 11. Specifically, as shown in Figure 6, the second end 192 is connected to the second side wall 182 of the groove 18 via the micro-connection section 193, with the second side wall 182 and the first side wall 181 set opposite to each other. Under the constraint of the micro-connection section 193, the wobbling of the "S" shaped connector 19 is avoided, allowing the second protective film layer 114 to adhere accurately, thereby increasing the yield and production efficiency of the FPC. In an example, the width of the micro-connection section 193 in the direction perpendicular to the top surface of the battery module body 2 can be 1 millimeter, thus achieving micro-connection.

In some possible implementations of this application, as shown in Figure 6, the positioning hole 183 is set on the side of the groove 18 away from the "S" shaped connector 19. The positioning hole 183 successively penetrates the first protective film layer 111, the FPC substrate layer 112, the cover film layer 113, and the second protective film layer 114. The positioning hole 183 is configured to allow the positioning column 3 on the battery module body to pass through. In this way, when the second protective film layer 114 is adhered to the "S" shaped connector 19, the positioning column 3 can also pass through the second protective film layer 114 via the positioning hole 183, facilitating the simultaneous positioning the first protective film layer 111, the FPC substrate layer 112, the cover film layer 113, and the second protective film layer 114 by the positioning column 3, further reducing the difficulty of accurately adhering the second protective film layer 114.

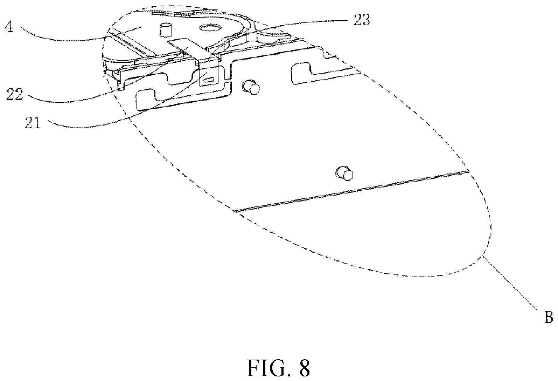

In some possible implementations of this application, as shown in Figure 8, Figure 8 is another detailed structural diagram of area B in Figure 1. In Figure 8, the signal acquisition patch 20 includes the first signal acquisition segment 21 and the second signal acquisition segment 22, connected in sequence along the length direction of the signal acquisition patch 20, and integrated into one piece. The first signal acquisition segment 21 is set on a side of the battery module body 2 where the first FPC section 11 is located, and an end of the first signal acquisition segment 21 away from the second signal acquisition segment 22 is fixed to the second end 192. After being bent relative to the first signal acquisition segment 21, the second signal acquisition segment 22 is attached to the top surface of the battery module body 2, with an end of the second signal acquisition segment 22 away from the first signal acquisition segment 21 fixed to the busbar 4 on the top surface. In this way, the signal acquisition patch 20 can collect battery status signals from the busbar 4 on the top surface of the battery module body 2 and transmit them to the first FPC section 11 on the side of the battery module body 2.

In some possible implementations of this application, the distance between the crease 23 along which the second signal acquisition segment 22 is to be bent relative to the first signal acquisition segment 21 and the second end 192 is greater than or equal to a preset distance, thus reserving a certain space between this crease and the second end 192. In this way, when bending the second signal acquisition segment 22 with a bending jig, the bending jig can use the space between the crease and the second end 192 to perform the bending operation, avoiding pressing on the first FPC section 11 and affecting the collection of battery status signals. The value of the preset distance is set based on the space required for the bending jig to perform the bending operation, for example, the preset distance can be 2 millimeters.

In a second aspect, some possible implementations of this application provide a battery module. The battery module includes the battery module body 2, as well as the FPC acquisition device 1 as described in any of the above. The battery module body 2 includes the batteries, the busbars 4, and the positioning columns 3. The FPC acquisition device 1 is configured to collect battery status signals in the battery module body 2, achieving the output of battery status signals on the front surface of the battery module body 2 while reducing the material cost of making the FPC board 10.

## Claims

1. An FPC acquisition device (1), **characterized in that**:
an FPC board (10), strip-shaped, comprising a first FPC section (11), a second FPC section (12), and a third FPC section (13) connected in sequence along a length direction of the FPC board (10), wherein the first FPC section (11), the second FPC section (12), and the third FPC section (13) are integrally formed; the first FPC section (11) is attached to a first surface of a battery module body (2); the second FPC section (12) is, after being folded and bent relative to the first FPC section (11), attached to a second surface of the battery module body (2); the third FPC section (13) is, after being folded and bent relative to the second FPC section (12), attached to a third surface of the battery module body (2); and the first surface, the second surface, and the third surface are adjacent to each other;
a signal acquisition patch (20) disposed at the first FPC section (11); and
a signal output interface (30) disposed at the third FPC section (13).

2. The FPC acquisition device (1) according to claim 1, **characterized in that** a folding direction of the second FPC section (12) relative to the first FPC section (11) is inclined to the length direction of the FPC board (10), and a folding direction of the third FPC section (13) relative to the second FPC section (12) is inclined to the length direction of the FPC board (10).

3. The FPC acquisition device (1) according to claim 2, **characterized in that** an angle between a direction of a crease along which the second FPC section (12) is folded relative to the first FPC section (11) and the length direction of the FPC board (10) is 45°, and an angle between a direction of a crease along which the third FPC section (13) is folded relative to the second FPC section (12) and the length direction of the FPC board (10) is 45°.

4. The FPC acquisition device (1) according to claim 1, **characterized in that** a groove (18) is provided on a side of the first FPC section (11) facing the second surface, the first FPC section (11) comprises an "S" shaped connector (19), the "S" shaped connector (19) is disposed in the groove (18), the "S" shaped connector (19) comprises a first end (191) and a second end (192), the first end (191) is fixed to a first side wall (181) of the groove (18), and the signal acquisition patch (20) is fixed to the second end (192).

5. The FPC acquisition device (1) according to claim 4, **characterized in that** a cross-section of the first FPC section (11) comprises a first protective film layer (111), an FPC substrate layer (112), a cover film layer (113), and a second protective film layer (114) stacked in order, the first protective film layer (111) is disposed on a side of the first FPC section (11) close to the battery module body (2), and one end of the signal acquisition patch (20) is fixed between the FPC substrate layer (112) and the cover film layer (113) at the second end (192).

6. The FPC acquisition device (1) according to claim 5, **characterized in that** the second end (192) is connected to a second side wall (182) of the groove (18) via a micro-connection section (193), the second side wall (182) and the first side wall (181) are opposite to each other.

7. The FPC acquisition device (1) according to claim 5, **characterized in that** a positioning hole (183) is provided on a side of the groove (18) away from the "S" shaped connector (19), the positioning hole (183) successively penetrates the first protective film layer (111), the FPC substrate layer (112), the cover film layer (113), and the second protective film layer (114), and is configured to allow a positioning column (3) on the battery module body (2) to pass through.

8. The FPC acquisition device (1) according to claim 4, **characterized in that** the signal acquisition patch (20) comprises a first signal acquisition segment (21) and a second signal acquisition segment (22), the first signal acquisition segment (21) and the second signal acquisition segment (22) are connected in sequence along a length direction of the signal acquisition patch (20), the first signal acquisition segment (21) is disposed on the first surface, and an end of the first signal acquisition segment (21) away from the second signal acquisition segment (22) is fixed to the second end (192); the second signal acquisition segment (22) is, after being bent relative to the first signal acquisition segment (21), attached to the second surface; and an end of the second signal acquisition segment (22) away from the first signal acquisition segment (21) is fixed to a busbar (4) on the second surface.

9. The FPC acquisition device (1) according to claim 8, **characterized in that** a distance between a crease (23) along which the second signal acquisition segment (22) is bent relative to the first signal acquisition segment (21) and the second end (192) is greater than or equal to a preset distance.

10. A battery module, **characterized in that** a battery module body (2), and the FPC acquisition device (1) according to any of claims 1 to 9, the FPC acquisition device (1) is configured to collect battery status signals in the battery module body (2).
